# EUROPÄISCHE PATENTSCHRIFT

(11) **EP 4 577 438 B1**
(45) Veröffentlichungstag und Bekanntmachung des Hinweises auf die Patenterteilung: **06.05.2026**
(21) Anmeldenummer: 23761450.8
(22) Anmeldetag: 18.08.2023
(51) Int. Cl.: B60W 50/08, B60W 50/10, B60W 50/14, B60W 30/165, B60W 30/12

(54) **VERFAHREN ZUM BETREIBEN EINES FAHRERASSISTENZSYSTEMS EINES FAHRZEUGS MIT BEREITSTELLUNG EINES FOLGEFAHRTMODUS ZUM FOLGEN EINES VORAUSFAHRENDEN VERKEHRSTEILNEHMERS, FAHRERASSISTENZSYSTEM SOWIE FAHRZEUG**
METHOD FOR OPERATING A DRIVER ASSISTANCE SYSTEM OF A VEHICLE WITH PROVISION OF A FOLLOWING TRAVEL MODE FOR FOLLOWING A ROAD USER AHEAD, DRIVER ASSISTANCE SYSTEM AND VEHICLE
PROCÉDÉ POUR FAIRE FONCTIONNER UN SYSTÈME D'AIDE AU CONDUCTEUR D'UN VÉHICULE AVEC FOURNITURE D'UN MODE DE DÉPLACEMENT DE SUIVI POUR SUIVRE UN USAGER DE LA ROUTE SITUÉ DEVANT, SYSTÈME D'AIDE AU CONDUCTEUR ET VÉHICULE

(30) Priorität: 23.08.2022 DE 102022121280
(43) Veröffentlichungstag der Anmeldung: 02.07.2025
(73) Patentinhaber: Bayerische Motoren Werke Aktiengesellschaft, 80809 München (DE)
(72) Erfinder: GOETZ, Alexander, 80796 München (DE)
(86) Internationale Anmeldenummer: PCT/EP2023/072818
(87) Internationale Veröffentlichungsnummer: WO 2024/041999

(56) Entgegenhaltungen:
- DE-A1- 102008 008 172
- US-A1- 2016 001 776
- US-A1- 2020 339 119
- US-B2- 11 235 764

## Beschreibung

Die vorliegende Erfindung betrifft ein Verfahren zum Betreiben eines Fahrerassistenzsystems eines Fahrzeugs. Darüber hinaus betrifft die vorliegende Erfindung ein Fahrerassistenzsystem für ein Fahrzeug. Schließlich betrifft die vorliegende Erfindung ein Fahrzeug mit einem derartigen Fahrerassistenzsystem.

Das Interesse richtet sich vorliegend insbesondere auf Fahrerassistenzsysteme, welche einen Fahrer bei einer Querführung des Fahrzeugs unterstützen. Derartige Fahrerassistenzsysteme, welche auch als Lenk- und Spurführungsassistenten oder auch als aktive Spurhalteassistenten bezeichnet werden, dienen insbesondere dazu, das Fahrzeug innerhalb eines Fahrstreifens bzw. der Fahrspur zu halten. Ein solches Fahrerassistenzsystem nutzt die Daten von einem oder mehreren Umfeldsensoren des Fahrzeugs, um die Begrenzungen eines Fahrstreifens bzw. der Fahrspurmarkierungen zu erkennen. Wenn diese Fahrspurmarkierungen mit einer ausreichenden Sicherheit erkannt werden, kann der Spurführungsassistent aktiviert werden und es können Lenkeingriffe durchgeführt werden, um das Fahrzeug innerhalb der Fahrspur bzw. des Fahrstreifens zu halten. Beispielsweise können die Lenkeingriffe derart erfolgen, dass das Fahrzeug mittig innerhalb des Fahrstreifens gehalten wird.

Im bekannten Stand der Technik verfügen die Spurhalteassistenten verschiedener Hersteller beispielsweise über eine Teilfunktion, bei der in beschränktem Umfang das Hinterherfahren hinter einem Vorderobjekt bzw. einem vorausfahrenden Verkehrsteilnehmer ermöglicht wird. Hierzu sind zumindest keine sichtbaren Fahrspurmarkierungen nötig, jedoch werden zahlreiche andere Funktionsbedingungen geprüft. Diese zahlreichen Einschränkungen sorgen zum einen für die Sicherheit des Fahrerassistenzsystems, da bei Verletzen einer der Funktionsbedingungen die Beendigung eines solchen Folgefahrt-Modus erfolgt. Auf der anderen Seite führen diese Einschränkungen zu einer stark reduzierten Verfügbarkeit und häufiger Frustration des Kunden, da der Lenkassistent oft nicht zuverlässig einem gegebenen vorausfahrenden Verkehrsteilnehmer folgt.

In diesem Zusammenhang beschreibt die EP 1 852 325 A1 ein Verfahren zur Folgeregelung für ein Kraftfahrzeug. Hierbei wird das Kraftfahrzeug auf einem Verkehrsweg mit mehreren Fahrspuren derart längs- und quergeregelt, dass infolge der Längs- und Querregelung ein Vorderfahrzeug durch das Kraftfahrzeug verfolgt wird. Beispielsweise kann der Trajektorie des Vorderfahrzeugs möglichst exakt gefolgt werden. Wenn ein Spurwechsel des Vorderfahrzeugs erkannt wird, kann die Verfolgung des Vorderfahrzeugs unterbrochen bzw. abgebrochen werden.

Zudem beschreibt die DE 10 2008 008 172 A1 ein Verfahren zur Längs- und Querführungsunterstützung des Fahrers eines Fahrzeugs, bei dem die Längsführungsunterstützung als Abstandsregelung zur Regelung des Abstands zwischen dem Fahrzeug und einem diesem vorausfahrenden Führungsfahrzeug durchgeführt wird und bei dem die Querführungsunterstützung wahlweise als eine Objektfolgeregelung zur Führung des Fahrzeugs nach einer Bewegungsspur des vorausfahrenden Führungsfahrzeugs oder als eine Spurfolgeregelung zur Führung des Fahrzeugs längs einer markierten Fahrspur bzw. als eine kombinierte Spur-Objektfolgeregelung durchgeführt wird.

Ferner offenbart die US 2016/001 776 A1 ein Steuerverfahren, in welchem ein Hostfahrzeug eine adaptive Fahrsteuerung (ACC) hat. Das Steuerverfahren enthält das Auswählen einer Fahrspur oder eines anderen Fahrzeugs als eine Zielfahrspur oder ein Zielfahrzeug für die ACC gemäß der Auswahl durch einen Fahrer.

Des Weiteren zeigt die US 2020/339 119 A1 eine Fahrunterstützungssteuervorrichtung, die in der Lage ist, ein Fahrzeug gemäß einem beliebigen von einem Fahrer aus mehreren Fahrunterstützungsmodi ausgewählten Modus zu steuern, wobei die mehreren Fahrunterstützungsmodi einen Modus zum Folgen eines vorausfahrenden Fahrzeugs umfassen.

Außerdem beschreibt die US 11 235 764 B2 ein Fahrerassistenzsystem in einem Kraftfahrzeug, das zumindest aktive Querführungseingriffe durchführt, das entkoppelt von der Aktivierung eines Längsregelsystems aktivierbar ist, aber sowohl mit als auch ohne Längsregelung aktiv sein kann, und das eine Stauassistent-Teilfunktion und eine Spurführungsassistent-Teilfunktion umfasst, wobei die beiden Teilfunktionen gemeinsam durch einen einzigen Ein-/Austaster aktivierbar und deaktivierbar sind.

Es ist Aufgabe der vorliegenden Erfindung, eine Lösung aufzuzeigen, wie die Funktionsweise eines Fahrerassistenzsystems zur Unterstützung der Querführung des Fahrzeugs erweitert werden kann.

Diese Aufgabe wird erfindungsgemäß durch ein Verfahren, durch ein Fahrerassistenzsystem sowie durch ein Fahrzeug mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum Betreiben eines Fahrerassistenzsystems eines Fahrzeugs. Das Verfahren umfasst das Überprüfen, ob ein vorausfahrender Verkehrsteilnehmer in einem Umfeld des Fahrzeugs erkannt wird. Zudem umfasst das Verfahren das Anbieten eines Standard-Querführungsmodus mit einer automatisierten Querführung des Fahrzeugs, wobei in dem Standard-Querführungsmodus zumindest zeitweise dem vorausfahrenden Verkehrsteilnehmer nachgefolgt wird, solange vorbestimmte Funktionsbedingungen erfüllt sind. Dabei beschreiben die Funktionsbedingungen zumindest ein Fahrverhalten des Fahrzeugs und/oder des vorausfahrenden Verkehrsteilnehmers. Dabei wird zusätzlich ein Folgefahrtmodus angeboten, falls der vorausfahrende Verkehrsteilnehmer erkannt wird, wobei in dem Folgefahrtmodus dem vorausfahrenden Verkehrsteilnehmer unabhängig von der Erfüllung der Funktionsbedingungen mit automatisierter Querführung nachgefolgt wird und wobei in dem Folgefahrtmodus eine Ausgabe ausgegeben wird, welche beschreibt, dass dem vorausfahrenden Verkehrsteilnehmer unabhängig von der Erfüllung der Funktionsbedingungen nachgefolgt wird.

Das Fahrerassistenzsystem kann zumindest einen Umfeldsensor aufweisen, mittels welchem Umfelddaten bereitgestellt werden können. Diese Umfelddaten können die Umgebung des Fahrzeugs bzw. ein Umfeld des Fahrzeugs beschreiben. Bei dem Umfeldsensor kann es sich beispielsweise um eine Kamera handeln, mittels welcher als die Umfelddaten Bilddaten bereitgestellt werden können. Mittels des Fahrerassistenzsystems bzw. einer Recheneinrichtung des Fahrerassistenzsystems können in den Umfelddaten dann Fahrstreifenbegrenzungen bzw. Fahrbahnmarkierungen erkannt werden, welche den Fahrstreifen, auf dem sich das Fahrzeug aktuell befindet, begrenzen. Es kann zudem vorgesehen sein, dass Fahrstreifenbegrenzungen von weiteren Fahrstreifen bzw. benachbarten Fahrstreifen erkannt werden.

Wenn diese Fahrstreifenbegrenzungen mit einer vorbestimmten Wahrscheinlichkeit bzw. Sicherheit für eine vorbestimmte Zeitdauer zuverlässig erkannt werden, kann der Standard-Querführungsmodus des Fahrerassistenzsystems aktiviert werden. Dies bedeutet, dass mittels des Fahrerassistenzsystems ein Lenkmoment bereitgestellt wird bzw. Lenkeingriffe durchgeführt werden, um das Fahrzeug innerhalb des Fahrstreifens bzw. der Fahrspur zu halten.

Darüber hinaus ist vorgesehen, dass anhand der Umfelddaten überprüft wird, ob zumindest ein vorausfahrender Verkehrsteilnehmer in dem Umfeld des Fahrzeugs und insbesondere in Vorwärtsfahrtrichtung vor dem Fahrzeug vorhanden ist. Der vorausfahrende Verkehrsteilnehmer kann ein weiterer Verkehrsteilnehmer bzw. ein weiteres Fahrzeug sein, welches sich in Vorwärtsfahrtrichtung vor dem Fahrzeug befindet. Es ist nicht erforderlich, dass es sich bei dem vorausfahrenden Verkehrsteilnehmer um einen unmittelbar vor dem Fahrzeug befindlichen Verkehrsteilnehmer handelt.

Wenn ein solcher vorausfahrender Verkehrsteilnehmer erkannt wurde, kann diesem in dem Standard-Querführungsmodus ebenfalls nachgefolgt werden. Bei dem Nachfolgen kann beispielsweise auf Grundlage der Umfelddaten des Umfeldsensors fortlaufend die relative Lage des vorausfahrenden Verkehrsteilnehmers zu dem Fahrzeug ermittelt werden und die Querführung des Fahrzeugs kann so angepasst werden, dass dem vorausfahrenden Verkehrsteilnehmer hinsichtlich der Querführung nachgefolgt wird. Insbesondere ist es auch vorgesehen, dass eine Längsführung des Fahrzeugs mittels des Fahrerassistenzsystems an den vorausfahrenden Verkehrsteilnehmer angepasst wird. Dies kann beispielsweise mittels einer adaptiven Geschwindigkeitsregelung bzw. mittels eines Abstandsregeltempomats erreicht werden.

In dem Standard-Querführungsmodus ist es insbesondere vorgesehen, dass dem vorausfahrenden Verkehrsteilnehmer nur dann nachgefolgt wird, falls die vorbestimmten Funktionsbedingungen erfüllt sind. Diese Funktionsbedingungen bzw. das Fahrverhalten können das Fahrverhalten des Fahrzeugs und/oder des vorausfahrenden Verkehrsteilnehmers beschreiben. Beispielsweise können die Funktionsbedingungen die Geschwindigkeiten des Fahrzeugs bzw. des vorausfahrenden Verkehrsteilnehmers, die Querbeschleunigung des Fahrzeugs bzw. des vorausfahrenden Verkehrsteilnehmers oder dergleichen beschreiben. Nur wenn diese Funktionsbedingungen erfüllt sind, kann dem vorausfahrenden Verkehrsteilnehmer nachgefolgt werden. Insbesondere ist vorgesehen, dass dem vorausfahrenden Verkehrsteilnehmer in dem Standard-Querführungsmodus nur für eine definierte Zeitdauer nachgefolgt werden kann. Ansonsten kann die Folgefahrt bzw. die automatisierte Querführung abgebrochen werden. In dem Standard-Querführungsmodus kann auf diese Weise beispielsweise kurzzeitig ein Zustand überbrückt werden, indem die Fahrbahnmarkierungen nicht oder nicht ausreichend erkannt werden.

Gemäß der vorliegenden Erfindung wird dem Nutzer bzw. Fahrer des Fahrzeugs zusätzlich der Folgefahrtmodus angeboten, falls der vorausfahrende Verkehrsteilnehmer erkannt wird.

In diesem erzwungenen Folgefahrtmodus kann dem vorausfahrenden Verkehrsteilnehmer unabhängig von der Erfüllung der Funktionsbedingungen mit automatisierter Querführung und insbesondere auch mit automatisierter Längsführung nachgefolgt werden. Insbesondere ist auch vorgesehen, dass für den Folgefahrtmodus keine zeitliche Begrenzung vorgegeben wird. Insbesondere kann dem vorausfahrenden Verkehrsteilnehmer nachgefolgt werden, falls dieser mit einer vorbestimmten Wahrscheinlichkeit bzw. Zuverlässigkeit erkannt wird.

Das Prinzip der vorliegenden Erfindung beruht auf einer gesonderten Einstellung des vorhandenen Fahrerassistenzsystems bzw. des Lenkassistenten, durch welchen die Verfügbarkeit der Objektfolgefahrt maximal erhöht werden kann. Beispielsweise kann die Einstellung dieses Folgefahrtmodus durch ein Menü erfolgen. Des Weiteren kann es vorgesehen sein, dass dem Fahrer in einer spielerischen Form, bzw. einer so genannten Gamification dieser Folgefahrtmodus angeboten bzw. bereitgestellt wird. Zudem ist es vorgesehen, dass in dem Folgefahrtmodus dem Fahrer bzw. Nutzer eine Ausgabe ausgegeben wird, welche ihn darauf hinweist, dass dem vorausfahrenden Verkehrsteilnehmer unabhängig von der Erfüllung der Funktionsbedingungen nachgefolgt wird. Insbesondere wird in diesem Zusammenhang auch eine Ausgabe an den Fahrer ausgegeben, welche ihn darauf hinweist, dass er die von dem Fahrzeug durchgeführten Fahrmanöver zu überwachen hat. Somit wird der Fahrer darüber informiert, dass in dem Folgefahrtmodus Risiken entstehen können und der Fahrer die Umgebung bzw. den Straßenverkehr zu überwachen hat.

Beim Aktivieren des Folgefahrtmodus loggt das Fahrerassistenzsystem bzw. der Lenkassistent momentan das vor dem eigenen Fahrzeug befindliche Objekt als Zielobjekt ein, welchem im Anschluss hinterhergefahren wird. Dabei kann die Prüfung sämtlicher eingangs erklärter Bedingungen bzw. Funktionsbedingungen deaktiviert werden, sodass in dem Folgefahrtmodus unabhängig von diesen Bedingungen die Querführung aufrechterhalten wird. Damit wird in dem Folgefahrtmodus eine "erzwungenen Objektfolgefahrt" bereitgestellt. Insgesamt kann auf diese Weise die Funktion des Fahrerassistenzsystems zur automatisierten Querführung des Fahrzeugs erweitert werden.

Bevorzugt beschreiben die Funktionsbedingungen eine Geschwindigkeit des Fahrzeugs, eine Geschwindigkeit des vorausfahrenden Verkehrsteilnehmers, eine Querbeschleunigung des Fahrzeugs, eine Querbeschleunigung des vorausfahrenden Verkehrsteilnehmers, eine Orientierung des Fahrzeugs, eine Orientierung des vorausfahrenden Verkehrsteilnehmers und/oder einen Abstand zwischen dem Fahrzeug und dem vorausfahrenden Verkehrsteilnehmer. Beispielsweise kann die Folgefahrt in dem Standard-Querführungsmodus nur bis zu einer bestimmten Geschwindigkeit des eigenen Fahrzeugs bzw. des vorausfahrenden Verkehrsteilnehmers aufrechterhalten werden. Darüber hinaus kann die Folgefahrt in dem Standard-Querführungsmodus nur bis zu einer bestimmten Querbeschleunigung des eigenen Fahrzeugs oder des vorausfahrenden Verkehrsteilnehmers aufrechterhalten werden. Alternativ oder zusätzlich kann es vorgesehen sein, dass die Folgefahrt in dem Standard-Querführungsmodus in Abhängigkeit von der Ausrichtung, der relativen Lage und/oder dem Abstand zwischen dem eigenen Fahrzeug und dem vorausfahrenden Verkehrsteilnehmer bestimmt wird. In dem Folgefahrtmodus kann es grundsätzlich vorgesehen sein, dass die zuvor genannten Funktionsbedingungen nicht berücksichtigt werden bzw. nicht als Abbruchkriterium herangezogen werden.

Weiterhin ist vorteilhaft, wenn in dem Folgefahrtmodus dem vorausfahrenden Verkehrsteilnehmer auch dann nachgefolgt wird, wenn der vorausfahrende Verkehrsteilnehmer ein Spurwechselmanöver durchführt und/oder wenn der vorausfahrende Verkehrsteilnehmer ein Abbiegemanöver durchführt. Es ist also insbesondere vorgesehen, dass der Folgefahrtmodus auch dann aufrecht erhalten wird, wenn von dem vorausfahrenden Verkehrsteilnehmer ein Spurwechselmanöver durchgeführt wird. Dies gilt in gleicher Weise für Abbiegemanöver, bei dem von dem Vorderfahrzeug ein Abbiegemanöver durchgeführt wird. Auch in diesem Fall kann dem vorausfahrenden Verkehrsteilnehmer nachgefolgt werden. Die Sicherheit des Fahrerassistenzsystems bzw. des Lenkassistenten bleibt während des Folgefahrtmodus gewährleistet, indem der Fahrer durch entsprechende Ausgaben bzw. Anzeigen stets darauf aufmerksam gemacht wird, dass dieser Modus aktiv ist und eine zuverlässige Verfolgung des Zielobjekts bzw. des vorausfahrenden Verkehrsteilnehmers stattfindet.

Hierbei ist insbesondere vorgesehen, dass vor dem Nachfolgen des vorausfahrenden Verkehrsteilnehmers, welcher ein Spurwechselmanöver bzw. ein Abbiegemanöver durchführt, eine Ausgabe ausgegeben wird. Wenn beispielsweise anhand der Umfelddaten des Umfeldsensors erkannt wird, dass von dem vorausfahrenden Verkehrsteilnehmer ein Spurwechselmanöver durchgeführt wird, kann bereits vor dem Durchführen dieses Spurwechselmanövers bzw. dem Nachfolgen des vorausfahrenden Verkehrsteilnehmers eine Ausgabe an den Fahrer ausgegeben werden. Dies gilt in gleicher Weise für ein Abbiegemanöver des vorausfahrenden Verkehrsteilnehmers. Beispielsweise kann der Fahrer optisch und/oder akustisch darüber informiert werden, dass dem vorausfahrenden Verkehrsteilnehmer bei dem Spurwechselmanöver bzw. dem Abbiegemanöver nachgefolgt wird. Beispielsweise können entsprechende Pfeile oder andere Symbole angezeigt werden, welche die zukünftige Trajektorie des Fahrzeugs bei dem Nachfolgen des Spurwechselmanövers bzw. des Abbiegemanövers verdeutlichen, angezeigt werden. Beispielsweise kann dies mittels Augmented Reality in einem angezeigten Umgebungsbild erfolgen. Zudem kann ein Text angezeigt werden und/oder akustisch ausgegeben werden, welcher auf den zukünftigen Abbiegevorgang bzw. Spurwechsel hindeutet. Somit kann dem Fahrer nochmals verdeutlicht werden, dass dem vorausfahrenden Verkehrsteilnehmer in dem Folgefahrtmodus auch bei einem Abbiegevorgang bzw. einem Spurwechsel gefolgt wird. Es kann zudem vorgesehen sein, dass die entsprechenden Fahrtrichtungsanzeiger automatisch aktiviert werden, wenn dem vorausfahrenden Verkehrsteilnehmer beim Durchführen eines Spurwechsels bzw. beim Durchführen eines Abbiegemanövers gefolgt wird. Auf diese Weise kann der nachfolgende Verkehr über die Absicht des eigenen Fahrzeugs informiert werden.

Weiterhin ist vorteilhaft, wenn eine Anzeige bereitgestellt wird, welche das Umfeld des Fahrzeugs beschreibt, wobei der vorausfahrende Verkehrsteilnehmer, welchem nachgefolgt wird, in der Anzeige hervorgehoben wird. Wie zuvor erläutert, kann in dem Folgefahrtmodus eine Ausgabe an den Fahrer ausgegeben werden. Beispielsweise kann diese Ausgabe in Form der Anzeige bereitgestellt werden. In dieser Anzeige kann dem Fahrer das Umfeld des Fahrzeugs und in diesem Umfeld befindliche weitere Verkehrsteilnehmer angezeigt werden. Beispielsweise können Symbole anzeigt werden, welche die weiteren bzw. vorausfahrenden Verkehrsteilnehmer repräsentieren. Wenn der Folgefahrtmodus aktiviert wird, kann derjenige vorausfahrende Verkehrsteilnehmer, welchem aktuell nachgefolgt wird, hervorgehoben werden. Dies eignet sich insbesondere, wenn mehrere vorausfahrende Verkehrsteilnehmer in dem Umfeld des Fahrzeugs vorhanden sind. Somit kann der Fahrer darüber informiert werden, welchem dieser Verkehrsteilnehmer aktuell in dem Folgefahrtmodus nachgefolgt wird. Dieser vorausfahrende Verkehrsteilnehmer bzw. dessen Repräsentation kann optisch durch eine Einfärbung, eine Markierung, eine Umrandung oder dergleichen hervorgehoben werden.

In einer weiteren Ausführungsform werden, falls eine Mehrzahl von vorausfahrenden Verkehrsteilnehmer erkannt wird, diese dem Fahrer angezeigt und für das Nachfolgen in dem Folgefahrtmodus zur Auswahl angeboten. Wie zuvor erläutert, können die erkannten vorausfahrenden Verkehrsteilnehmer angezeigt werden. Für das Aktivieren bzw. nach dem Aktivieren des Folgefahrtmodus kann dann von dem Fahrer eines der vorausfahrenden Verkehrsteilnehmer ausgewählt werden, welchem dann in dem Folgefahrtmodus tatsächlich nachgefolgt wird. Es kann auch zudem vorgesehen sein, dass während des Folgefahrtmodus durch eine entsprechende Bedieneingabe des Nutzes bzw. des Fahrers der vorausfahrende Verkehrsteilnehmer, dem nachgefolgt wird, verändert wird. Mit anderen Worten kann in dem Folgefahrtmodus ein anderer vorausfahrender Verkehrsteilnehmer ausgewählt werden, dem dann nachgefolgt wird. Dies ermöglicht für den Fahrer bzw. Nutzer eine einfache und komfortable Bedienung dieses Folgefahrtmodus.

Weiterhin ist vorteilhaft, wenn in dem Folgefahrtmodus eine Notbremsfunktion und/oder eine Seitenkollisionswarnung aktiviert wird oder aktiviert bleibt. Die Sicherheit des Fahrerassistenzsystems bzw. des Lenkassistenten bleibt während des Folgefahrtmodus dadurch gewährleistet, dass beispielsweise eine Notbremsfunktion und/oder eine Fahrerassistenzfunktion zur Vermeidung einer seitlichen Kollision aktiviert werden bzw. aktiviert bleiben. Somit kann eine Kollision zwischen dem Fahrzeug und einem weiteren Verkehrsteilnehmer während des Folgefahrtmodus verhindert werden.

Weiterhin hat der Fahrer bevorzugt zu jeder Zeit die Möglichkeit, den Folgefahrtmodus durch eine vorbestimmte Bedienhandlung zu deaktivieren. Bei dieser Bedienhandlung kann es sich beispielsweise um einen Eingriff in das Lenkrad handeln. Wenn beispielsweise ein vorbestimmter Lenkradwinkel und/oder ein vorbestimmtes Lenkradmoment überschritten wird, kann der Folgefahrtmodus deaktiviert werden. Zudem kann der Folgefahrtmodus deaktiviert werden, falls von dem Fahrer das Bremspedal betätigt wird. Ferner kann es vorgesehen sein, dass der Folgefahrtmodus beendet wird, wenn der Fahrer ein entsprechendes Bedienelement zum Deaktivieren des Folgefahrtmodus betätigt.

Weiterhin ist vorteilhaft, wenn ein Abbruch des Folgefahrtmodus bei Aktivierung der Fahrtrichtungsanzeiger durch den Fahrer unterbleibt. Mit anderen Worten kann der Folgefahrtmodus nicht unterbrochen werden, wenn der Fahrer den Blinkerhebel betätigt. Dies gilt insbesondere für den Fall, wenn der Blinkerhebel von dem Fahrer dann betätigt wird, wenn der vorausfahrende Verkehrsteilnehmer ein Spurwechselmanöver und/oder ein Abbiegemanöver durchführt. In diesem Fall kann das Betätigen des Blinkerhebels bzw. die Aktivierung des Fahrtrichtungsanzeigers von dem Fahrer als Bestätigung für das Nachfolgen des vorausfahrenden Verkehrsteilnehmers angesehen werden.

Ein erfindungsgemäßes Fahrerassistenzsystem für ein Fahrzeug ist dazu eingerichtet, zu überprüfen, ob ein vorausfahrender Verkehrsteilnehmer in einem Umfeld des Fahrzeugs erkannt wird. Zudem ist das Fahrerassistenzsystem dazu eingerichtet, einen Standard-Querführungsmodus mit automatisierter Querführung des Fahrzeugs anzubieten, wobei das Fahrzeug in dem Standard-Querführungsmodus zumindest zeitweise dem vorausfahrenden Verkehrsteilnehmer nachfolgt, solange vorbestimmte Funktionsbedingungen erfüllt sind. Dabei beschreiben die Funktionsbedingungen zumindest ein Fahrverhalten des Fahrzeugs und/oder des vorausfahrenden Verkehrsteilnehmers. Das Fahrerassistenzsystem ist ferner dazu eingerichtet, zusätzlich einen Folgefahrtmodus anzubieten, falls der vorausfahrende Verkehrsteilnehmer erkannt wird, wobei das Fahrzeug in dem Folgefahrtmodus dem vorausfahrenden Verkehrsteilnehmer unabhängig von der Erfüllung der Funktionsbedingungen mit automatisierter Querführung nachfolgt. Außerdem ist das Fahrerassistenzsystem dazu eingerichtet, in dem Folgefahrtmodus eine Ausgabe auszugeben, welche beschreibt, dass dem vorausfahrenden Verkehrsteilnehmer unabhängig von der Erfüllung der Funktionsbedingungen nachgefolgt wird.

Das Fahrerassistenzsystem kann zumindest einen Umfeldsensor aufweisen, mittels welchem Umfelddaten bereitgestellt werden können. Mittels einer Recheneinrichtung des Fahrerassistenzsystems kann in dem Umfelddaten zumindest ein vorausfahrender Verkehrsteilnehmer erkannt werden. Zudem kann das Fahrerassistenzsystem eine Ausgabeeinrichtung aufweisen, um eine Ausgabe an den Fahrer auszugeben. Die Ausgabe kann grundsätzlich optisch, akustisch und/oder haptisch ausgegeben werden. Die Ausgabeeinrichtung kann bevorzugt zumindest eine Anzeige, ein Display, ein Head-up-Display oder dergleichen umfassen. Des Weitern kann das Fahrerassistenzsystem die Querführung und bevorzugt auch die Längsführung des Fahrzeugs übernehmen, um dem vorausfahrenden Verkehrsteilnehmer nachzufolgen.

Ein erfindungsgemäßes Fahrzeug umfasst ein erfindungsgemäßes Fahrerassistenzsystem. Das Fahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Fahrzeug.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs, welches ein Fahrerassistenzsystem aufweist; und
- Fig. 2: das Fahrzeug gemäß Fig. 1 in einer beispielhaften Verkehrssituation, bei welchem es einem vorausfahrenden Verkehrsteilnehmer nachfolgt.

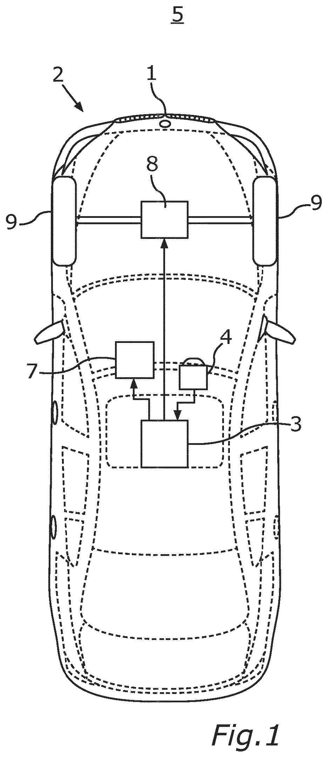

Fig. 1 zeigt ein Fahrzeug 1, welches vorliegend als Personenkraftwagen ausgebildet ist, in einer Draufsicht. Das Fahrzeug 1 umfasst ein Fahrerassistenzsystem 2, mittels welchem ein Fahrer des Fahrzeugs 1 bei der Querführung des Fahrzeugs 1 unterstützt werden kann. Das Fahrerassistenzsystem 2 umfasst eine Recheneinrichtung 3, welche beispielsweise durch zumindest ein elektronisches Steuergerät des Fahrzeugs 1 gebildet sein kann.

Darüber hinaus umfasst das Fahrerassistenzsystem 2 zumindest einen Umfeldsensor 4. In dem gezeigten Beispiel umfasst das Fahrerassistenzsystem 2 einen Umfeldsensor 4, welcher vorliegend als Kamera ausgebildet ist. Mit dem Umfeldsensor 4 können Umfelddaten bzw. Bilddaten bereitgestellt werden, welche eine Umgebung 5 des Fahrzeugs 1 beschreiben.

Die Recheneinrichtung 3 ist ferner dazu eingerichtet, ein vorliegend nur schematisch dargestelltes Lenksystem 8 des Fahrzeugs 1 anzusteuern. Durch die Ansteuerung des Lenksystems 8 kann ein Lenkmoment bzw. ein Lenkeingriff erzeugt werden. Durch die Ansteuerung des Lenksystems können die lenkbaren Räder 9 des Fahrzeugs 1 gelenkt werden und somit die Querführung des Fahrzeugs 1 beeinflusst werden. Zudem kann das Fahrerassistenzsystem 2 eine Längsführung des Fahrzeugs 1 übernehmen.

Darüber hinaus umfasst das Fahrerassistenzsystem 2 eine Ausgabeeinrichtung 7, mittels welcher eine Ausgabe an einen Fahrer bzw. Nutzer des Fahrzeugs 1 ausgegeben werden kann. Die Ausgabeeinrichtung 7 kann zumindest eine Anzeigeeinrichtung bzw. ein Display umfassen, mit dem eine optische Anzeige als Ausgabe bereitgestellt werden kann. Zudem kann mittels der Ausgabeeinrichtung 7 eine akustische und/oder haptische Ausgabe bereitgestellt werden.

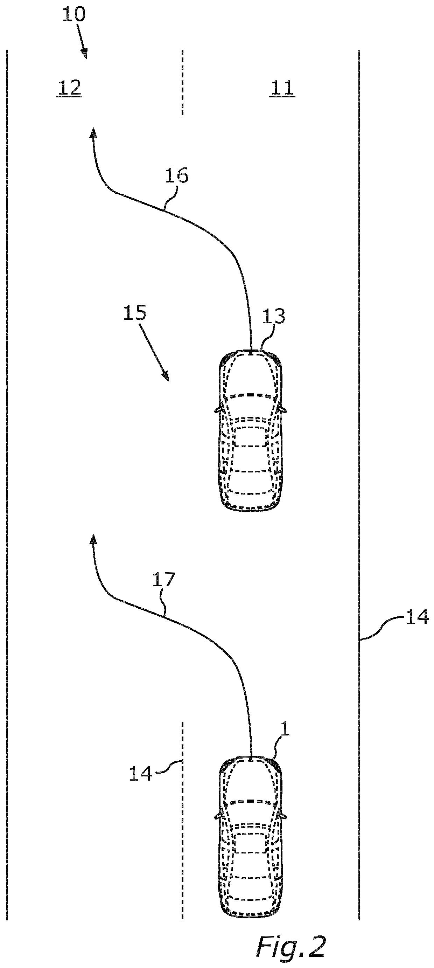

Fig. 2 zeigt das Fahrzeug 1 gemäß Fig. 1 in einer schematisch dargestellten Verkehrssituation. Vorliegend befindet sich das Fahrzeug 1 auf einer Straße 10, welche einen ersten Fahrstreifen 11 und einen zweiten Fahrstreifen 12 aufweist. In Vorwärtsfahrtrichtung vor dem Fahrzeug 1 befindet sich ein vorausfahrender Verkehrsteilnehmer 13. Bei dem vorausfahrenden Verkehrsteilnehmer 13 handelt es sich um einen weiteren Personenkraftwagen.

Anhand der Umfelddaten, die mittels des Umfeldsensors 4 bzw. der Kamera bereitgestellt werden, können Fahrstreifenbegrenzungen 14 erkannt werden, welche den ersten Fahrstreifen 11 begrenzen. Bei den Fahrstreifenbegrenzungen 14 handelt es sich vorliegend um Fahrbahnmarkierungen. Wenn diese Fahrstreifenbegrenzungen 14 erkannt werden, kann ein Standard-Querführungsmodus des Fahrerassistenzsystems 2 aktiviert werden. In diesem Standard-Querführungsmodus kann mittels des Steuergeräts 3 das Lenksystem 8 derart angesteuert werden, dass das Fahrzeug 1 mittig innerhalb des ersten Fahrstreifens 11 gehalten wird.

In einem Bereich 15 der Straße 10 sind die Fahrbahnmarkierungen zwischen dem ersten Fahrstreifen 11 und dem zweiten Fahrstreifen 12 nicht vorhanden bzw. können auf Grundlage der Umfelddaten nicht erkannt werden. In dem Standard-Querführungsmodus kann in diesem Fall kurzzeitig dem vorausfahrenden Verkehrsteilnehmer 13 nachgefolgt werden und somit die automatisierte Querführung zum Halten des Fahrzeugs 1 innerhalb des Fahrstreifens 11 aufrechterhalten werden. In dem Standard-Querführungsmodus kann dem vorausfahrenden Verkehrsteilnehmer 13 dann nachgefolgt werden, falls vorbestimmte Funktionsbedingungen erfüllt sind. Diese Funktionsbedingungen können beispielsweise die Geschwindigkeit des Fahrzeugs 1, die Geschwindigkeit des vorausfahrenden Verkehrsteilnehmers 13, die Querbeschleunigung des Fahrzeugs 1, die Querbeschleunigung des vorausfahrenden Verkehrsteilnehmers 13 und/oder die relative Lage bzw. Ausrichtung zwischen dem Fahrzeug 1 und dem weiteren Verkehrsteilnehmer 13 beschreiben.

Zudem ist vorgesehen, dass dem Fahrer, für den Fall, dass der vorausfahrende Verkehrsteilnehmer 13 zuverlässig erkannt wird, ein Folgefahrtmodus angeboten wird. In diesem Folgefahrtmodus kann die automatisierte Querführung des Fahrzeugs 1 mittels des Fahrerassistenzsystems 2 derart durchgeführt werden, dass dem vorausfahrenden Verkehrsteilnehmer 13 unabhängig von der Erfüllung der Funktionsbedingungen nachgefolgt wird. In diesem Folgefahrtmodus kann zusätzlich mittels der Ausgabeeinrichtung 7 an den Fahrer eine Ausgabe ausgegeben werden, welche ihn darauf hinweist, dass dem vorausfahrenden Verkehrsteilnehmer 13 nachgefolgt wird und dass während des Folgefahrtmodus die Funktionsbedingungen nicht berücksichtigt werden.

In dem Beispiel gemäß Fig. 2 wird davon ausgegangen, dass sich der Fahrer des Fahrzeugs 1 auf seiner täglichen Fahrt von der Wohnung ins Büro befindet. Nach dem Einbiegen auf die Straße 10 kann der Fahrer das Fahrerassistenzsystem bzw. dem Standard-Querführungsmodus des Fahrerassistenzsystems 2 aktivieren. Mittels des Fahrerassistenzsystems 2 kann dann in eingeschränkter Form die Objektfolgefahrt umgesetzt werden, ohne dass der Fahrer wesentlich dabei unterstützen muss.

Wenn der Fahrer aber seinen Arbeitsweg bzw. die Verhältnisse der Straße 10 kennt, weiß er beispielsweise, dass zahlreiche Streckenabschnitte auf der Straße 10 bzw. dem Arbeitsweg existieren, in denen der Lenkassistent bzw. das Fahrerassistenzsystem 2 nicht selbsttägig die Fahrzeugführung übernehmen kann. Dies kann beispielsweise in Bereichen 15 der Fall sein, in denen die Fahrbahnmarkierungen bzw. die Fahrstreifenbegrenzungen 14 nicht vorhanden sind.

In dem vorliegenden Beispiel kann der Fahrer den Folgefahrtmodus aktivieren und dem vorausfahrenden Verkehrsteilnehmer 13 nachfolgen. Mittels der Ausgabeeinrichtung 7 kann dann an den Fahrer ein Warnhinweis ausgegeben werden, dass der Fahrer den Fahrweg seines Fahrzeugs 1 zu überwachen hat und dass sein Fahrzeug 1 konsequent dem vorausfahrenden Verkehrsteilnehmer 13 nachfolgen wird. Der Fahrer kann sich anschließend darauf verlassen, dass das Fahrerassistenzsystem 2 seines Fahrzeugs 1 dem vorausfahrenden Verkehrsteilnehmer 13 nachfolgen wird, welches beispielsweise den größten Teil seiner Arbeitsstrecke in gleicher Weise fährt. Sobald der Fahrer einen anderen Weg als der vorausfahrende Verkehrsteilnehmer 13 einschlagen muss, kann der Fahrer den Folgefahrtmodus per Knopfdruck oder durch eine Lenkradbetätigung beenden.

Dabei kann der Folgefahrtmodus auch dann aufrechterhalten werden, falls der vorausfahrende Verkehrsteilnehmer 13 ein Spurwechselmanöver durchführt. Dies ist vorliegend durch die Trajektorie 16 dargestellt, welche von dem vorausfahrenden Verkehrsteilnehmer durchgeführt wird. In diesem Fall wird mittels des Fahrzeugs 1 ebenfalls ein Spurwechselmanöver durchgeführt und das Fahrzeug 1 wird entlang der Trajektorie 17 manövriert. Der Folgefahrtmodus kann auch aufrechterhalten werden, wenn der vorausfahrende Verkehrsteilnehmer 13 ein Abbiegemanöver durchführt. In dem Folgefahrtmodus kann insbesondere ein Notbremsassistent und/oder ein Assistent zur Vermeidung von Seitenkollisionen aktiviert bleiben, um die Sicherheit zu gewährleisten.

## Patentansprüche

1. Verfahren zum Betreiben eines Fahrerassistenzsystems (2) eines Fahrzeugs (1) mit den Schritten:
- Überprüfen, ob ein vorausfahrender Verkehrsteilnehmer (13) in einem Umfeld (5) des Fahrzeugs (1) erkannt wird,
- Anbieten eines Standard-Querführungsmodus mit einer automatisierten Querführung des Fahrzeugs (1),
- wobei in dem Standard-Querführungsmodus zumindest zeitweise dem vorausfahrenden Verkehrsteilnehmer (13) nachgefolgt wird, solange vorbestimmte Funktionsbedingungen erfüllt sind, und
- wobei die Funktionsbedingungen zumindest ein Fahrverhalten des Fahrzeugs (1) und/oder des vorausfahrenden Verkehrsteilnehmers (13) beschreiben,
**dadurch gekennzeichnet, dass**
- zusätzlich ein Folgefahrtmodus angeboten wird, falls der vorausfahrende Verkehrsteilnehmer (13) erkannt wird,
- wobei in dem Folgefahrtmodus dem vorausfahrenden Verkehrsteilnehmer (13) unabhängig von der Erfüllung der Funktionsbedingungen mit automatisierter Querführung nachgefolgt wird und
- wobei in dem Folgefahrtmodus eine Ausgabe ausgegeben wird, welche beschreibt, dass dem vorausfahrenden Verkehrsteilnehmer (13) unabhängig von der Erfüllung der Funktionsbedingungen nachgefolgt wird.

2. Verfahren nach Anspruch 1,
**dadurch gekennzeichnet, dass**
die Funktionsbedingungen eine Geschwindigkeit des Fahrzeugs (1), eine Geschwindigkeit des vorausfahrenden Verkehrsteilnehmers (13), eine Querbeschleunigung des Fahrzeugs (1), eine Querbeschleunigung des vorausfahrenden Verkehrsteilnehmers (13), eine Orientierung des Fahrzeugs (1), eine Orientierung des vorausfahrenden Verkehrsteilnehmers (13) und/oder eine relative Lage zwischen dem Fahrzeug (1) und dem vorausfahrenden Verkehrsteilnehmer (13) beschreiben.

3. Verfahren nach Anspruch 1 oder 2,
**dadurch gekennzeichnet, dass**
in dem Folgefahrtmodus dem vorausfahrenden Verkehrseilnehmer (13) auch dann nachgefolgt wird, wenn der vorausfahrende Verkehrsteilnehmer (13) ein Spurwechselmanöver durchführt und/oder wenn der vorausfahrende Verkehrsteilnehmer ein Abbiegemanöver durchführt.

4. Verfahren nach Anspruch 3,
**dadurch gekennzeichnet, dass**
vor dem Nachfolgen des vorausfahrende Verkehrsteilnehmers (13), welcher ein Spurwechselmanöver bzw. ein Abbiegemanöver durchführt, eine Ausgabe ausgegeben wird.

5. Verfahren nach einem der vorhergehenden Ansprüche,
**dadurch gekennzeichnet, dass**
eine Anzeige bereitgestellt wird, welche das Umfeld (5) des Fahrzeugs (1) beschreibt, wobei der vorausfahrende Verkehrsteilnehmer (13), welchem nachgefolgt wird, in der Anzeige hervorgehoben wird.

6. Verfahren nach einem der vorhergehenden Ansprüche,
**dadurch gekennzeichnet, dass**
falls eine Mehrzahl von vorausfahrenden Verkehrsteilnehmern (13) erkannt wird, diese vorausfahrenden Verkehrsteilnehmer (13) dem Fahrer angezeigt werden und für das Nachfolgen in dem Folgefahrtmodus zur Auswahl angeboten werden.

7. Verfahren nach einem der vorhergehenden Ansprüche,
**dadurch gekennzeichnet, dass**
in dem Folgefahrtmodus eine Notbremsfunktion und/oder Seitenkollisionswarnung aktiviert wird oder aktiviert bleibt.

8. Verfahren nach einem der vorhergehenden Ansprüche,
durch gekennzeichnet, dass
ein Abbruch des Folgefahrtmodus bei Aktivierung der Fahrtrichtungsanzeiger durch den Fahrer unterbleibt.

9. Fahrerassistenzsystem (2) für ein Fahrzeug (1), wobei das Fahrerassistenzsystem (2) dazu eingerichtet ist:
- zu überprüfen, ob ein vorausfahrender Verkehrsteilnehmer (13) in einem Umfeld (5) des Fahrzeugs (1) erkannt wird,
- einen Standard-Querführungsmodus mit einer automatisierten Querführung des Fahrzeugs (1) anzubieten,
- wobei das Fahrzeug (1) in dem Standard-Querführungsmodus zumindest zeitweise dem vorausfahrenden Verkehrsteilnehmer (13) nachfolgt, solange vorbestimmte Funktionsbedingungen erfüllt sind, und
- wobei die Funktionsbedingungen zumindest ein Fahrverhalten des Fahrzeugs (1) und/oder des vorausfahrenden Verkehrsteilnehmers (13) beschreiben, **dadurch gekennzeichnet, dass**
das Fahrerassistenzsystem (2) ferner dazu eingerichtet ist:
- beim Erkennen des vorausfahrenden Verkehrsteilnehmers (13) zusätzlich einen Folgefahrtmodus anzubieten,
- wobei das Fahrzeug (1) in dem Folgefahrtmodus dem vorausfahrenden Verkehrsteilnehmer (13) unabhängig von der Erfüllung der Funktionsbedingungen mit automatisierter Querführung nachfolgt, und
- in dem Folgefahrtmodus eine Ausgabe auszugeben, welche beschreibt, dass dem vorausfahrenden Verkehrsteilnehmer unabhängig von der Erfüllung der Funktionsbedingungen nachgefolgt wird.

10. Fahrzeug (1), insbesondere Personenkraftwagen, umfassend ein Fahrerassistenzsystem (2) nach Anspruch 9.

## Claims

1. Method for operating a driver assistance system (2) of a vehicle (1) comprising the steps of:
checking whether a preceding road user (13) is detected in a surrounding environment (5) of the vehicle (1),
offering a standard lateral guidance mode with automated lateral guidance of the vehicle (1), wherein in the standard lateral guidance mode the preceding road user (13) is followed at least temporarily as long as predetermined functional conditions are fulfilled, and
wherein the functional conditions describe at least a driving behavior of the vehicle (1) and/or of the preceding road user (13),
**characterized in that**
additionally a follow-drive mode is offered if the preceding road user (13) is detected,
wherein in the follow-drive mode the preceding road user (13) is followed with automated lateral guidance independently of the fulfillment of the functional conditions, and
wherein in the follow-drive mode an output is outputted which describes that the preceding road user (13) is followed independently of the fulfillment of the functional conditions.

2. Method according to claim 1,
**characterized in that**
the functional conditions describe a speed of the vehicle (1), a speed of the preceding road user (13), a lateral acceleration of the vehicle (1), a lateral acceleration of the preceding road user (13), an orientation of the vehicle (1), an orientation of the preceding road user (13) and/or a relative position between the vehicle (1) and the preceding road user (13).

3. Method according to claim 1 or 2,
**characterized in that**
in the follow-drive mode the preceding road user (13) is followed even when the preceding road user (13) performs a lane change maneuver and/or when the preceding road user performs a turning maneuver.

4. Method according to claim 3,
**characterized in that**
before following the preceding road user (13) which performs a lane change maneuver or a turning maneuver, an output is outputted.

5. Method according to one of the preceding claims,
**characterized in that**
a display is provided which describes the surrounding environment (5) of the vehicle (1), wherein the preceding road user (13) which is followed is highlighted in the display.

6. Method according to one of the preceding claims,
**characterized in that**
if a plurality of preceding road users (13) is detected, these preceding road users (13) are displayed to the driver and are offered for selection for following in the follow-drive mode.

7. Method according to one of the preceding claims,
**characterized in that**
in the follow-drive mode an emergency braking function and/or side collision warning is activated or remains activated.

8. Method according to one of the preceding claims,
**characterized in that**
a termination of the follow-drive mode is omitted upon activation of the turn signal indicators by the driver.

9. Driver assistance system (2) for a vehicle (1), wherein the driver assistance system (2) is configured:
to check whether a preceding road user (13) is detected in a surrounding environment (5) of the vehicle (1),
to offer a standard lateral guidance mode with automated lateral guidance of the vehicle (1),
wherein the vehicle (1) in the standard lateral guidance mode follows the preceding road user (13) at least temporarily as long as predetermined functional conditions are fulfilled, and
wherein the functional conditions describe at least a driving behavior of the vehicle (1) and/or of the preceding road user (13),
**characterized in that**
the driver assistance system (2) is further configured:
upon detecting the preceding road user (13) to additionally offer a follow-drive mode,
wherein the vehicle (1) in the follow-drive mode follows the preceding road user (13) with automated lateral guidance independently of the fulfillment of the functional conditions, and
to output in the follow-drive mode an output which describes that the preceding road user is followed independently of the fulfillment of the functional conditions.

10. Vehicle (1), in particular passenger car, comprising a driver assistance system (2) according to claim 9.

## Revendications

1. Procédé pour faire fonctionner un système d'assistance au conducteur (2) d'un véhicule (1) comprenant les étapes suivantes :
vérifier si un usager de la route précédent (13) est détecté dans un environnement (5) du véhicule (1),
offrir un mode de guidage latéral standard avec un guidage latéral automatisé du véhicule (1),
dans lequel dans le mode de guidage latéral standard l'usager de la route précédent (13) est suivi au moins temporairement tant que des conditions fonctionnelles prédéterminées sont remplies, et
dans lequel les conditions fonctionnelles décrivent au moins un comportement de conduite du véhicule (1) et/ou de l'usager de la route précédent (13),
**caractérisé en ce que**
en outre un mode de conduite en file est offert si l'usager de la route précédent (13) est détecté,
dans lequel dans le mode de conduite en file l'usager de la route précédent (13) est suivi avec guidage latéral automatisé indépendamment du remplissement des conditions fonctionnelles, et
dans lequel dans le mode de conduite en file une sortie est émise qui décrit que l'usager de la route précédent (13) est suivi indépendamment du remplissement des conditions fonctionnelles.

2. Procédé selon la revendication 1,
**caractérisé en ce que**
les conditions fonctionnelles décrivent une vitesse du véhicule (1), une vitesse de l'usager de la route précédent (13), une accélération latérale du véhicule (1), une accélération latérale de l'usager de la route précédent (13), une orientation du véhicule (1), une orientation de l'usager de la route précédent (13) et/ou une position relative entre le véhicule (1) et l'usager de la route précédent (13).

3. Procédé selon la revendication 1 ou 2,
**caractérisé en ce que**
dans le mode de conduite en file l'usager de la route précédent (13) est suivi même lorsque l'usager de la route précédent (13) effectue une manœuvre de changement de voie et/ou lorsque l'usager de la route précédent effectue une manœuvre de virage.

4. Procédé selon la revendication 3,
**caractérisé en ce que**
avant de suivre l'usager de la route précédent (13) qui effectue une manœuvre de changement de voie ou une manœuvre de virage, une sortie est émise.

5. Procédé selon l'une des revendications précédentes,
**caractérisé en ce que**
un affichage est fourni qui décrit l'environnement (5) du véhicule (1),
dans lequel l'usager de la route précédent (13) qui est suivi est mis en évidence dans l'affichage.

6. Procédé selon l'une des revendications précédentes,
**caractérisé en ce que**
si une pluralité d'usagers de la route précédents (13) est détectée, ces usagers de la route précédents (13) sont affichés au conducteur et sont offerts pour sélection pour le suivi dans le mode de conduite en file.

7. Procédé selon l'une des revendications précédentes,
**caractérisé en ce que**
dans le mode de conduite en file une fonction de freinage d'urgence et/ou avertissement de collision latérale est activée ou reste activée.

8. Procédé selon l'une des revendications précédentes,
**caractérisé en ce que**
une interruption du mode de conduite en file est omise lors de l'activation des indicateurs de direction par le conducteur.

9. Système d'assistance au conducteur (2) pour un véhicule (1), dans lequel le système d'assistance au conducteur (2) est configuré pour :
vérifier si un usager de la route précédent (13) est détecté dans un environnement (5) du véhicule (1),
offrir un mode de guidage latéral standard avec un guidage latéral automatisé du véhicule (1),
dans lequel le véhicule (1) dans le mode de guidage latéral standard suit l'usager de la route précédent (13) au moins temporairement tant que des conditions fonctionnelles prédéterminées sont remplies, et
dans lequel les conditions fonctionnelles décrivent au moins un comportement de conduite du véhicule (1) et/ou de l'usager de la route précédent (13),
**caractérisé en ce que**
le système d'assistance au conducteur (2) est en outre configuré pour :
lors de la détection de l'usager de la route précédent (13) offrir en outre un mode de conduite en file,
dans lequel le véhicule (1) dans le mode de conduite en file suit l'usager de la route précédent (13) avec guidage latéral automatisé indépendamment du remplissement des conditions fonctionnelles, et
émettre dans le mode de conduite en file une sortie qui décrit que l'usager de la route précédent est suivi indépendamment du remplissement des conditions fonctionnelles.

10. Véhicule (1), en particulier voiture particulière, comprenant un système d'assistance au conducteur (2) selon la revendication 9.
